# EUROPEAN PATENT APPLICATION

(11) **EP 4 831 096 A1**
(43) Date of publication of application: **28.10.2026**
(21) Application number: 26162226.0
(22) Date of filing: 04.03.2026
(51) Int. Cl.: B65G 47/84, B07C 5/36, B65G 19/02

(54) **SYSTEM AND METHOD FOR SORTING IRREGULAR OBJECTS**

(30) Priority: 16.04.2025 US 202563789744 P; 20.02.2026 US 202619545992
(71) Applicant: Intelligrated Headquarters, LLC, Mason, OH 45040 (US)
(72) Inventor: KOSHT, Danial Lewis, Charlotte, 28202 (US); PAHLS, Justen Thomas, Charlotte, 28202 (US); SEBASTIAN, Nick, Charlotte, 28202 (US); TURCO, Anthony J., Charlotte, 28202 (US)
(74) Representative: Haseltine Lake Kempner LLP

(57) **Abstract**

An object sorter comprising a support frame, a transport surface to transport objects, and a plurality of pusher shoes mounted to the transport surface adjacent a first edge of the transport surface, each pusher shoe selectively and independently extendible from the first edge of the transport surface to the second edge. Each of a selectable number of pusher shoes are selectively and independently extendible away from the first edge of the transport surface to form a selectable pattern, such that the selectable number of pusher shoes are adapted to selectively push an object off the transport surface, the object being at least one of (i) an object having at least one cross-section that is circular, oval, or elliptical, (ii) an object having at least one dimension that is greater than at least one other dimension by a predetermined percentage; and/or (iii) an object having no symmetry.

## Description

### CROSS-REFERENCE TO RELATED APPLICATIONS

This application claims priority to and the benefit of US Provisional Patent Application Serial No. 63/789,744, filed April 16, 2025, and titled "SYSTEM AND METHOD FOR SORTING IRREGULAR OBJECTS," which is incorporated herein by reference in its entirety.

### TECHNOLOGICAL FIELD

Example embodiments of the present disclosure relate generally to conveyor systems and, more particularly, to sliding shoe sorters for use in material handling systems.

### BACKGROUND

Material handling systems are used, for example, to move large numbers of objects through a building, such as a warehouse or distribution center. In a common configuration, objects to be shipped out (e.g., purchased products) (which may be termed "inbound products") are received at a distribution center, placed on a material handling system at one or more input points, and transported to a respective one of a plurality of output points. For example, each output point may correspond to a zip/postal code of the final delivery destination of the product such that the products reaching each output point are loaded onto a respective truck to be transported to another distribution center within or near the respective zip/postal code of the final delivery destination. Preferably, such material handling systems should quickly and accurately move each object from its input point to its output point.

Such material handling systems often comprise a large number of conveyors, with diverters and/or sorters or sortation conveyors. A sortation conveyor system typically conveys and distributes articles along moving conveyor surfaces and diverts selected articles onto a particular conveying branch (often called a spur). Sortation conveyors often employ a plurality of pusher elements (often called pusher shoes or simply shoes) which may be selectively moved across the conveying surface in order to divert an article from the primary conveying path and onto a secondary conveying branch. Such sortation conveyers are often called sliding shoe sorters. Sortation conveyors have a primary conveying surface which can comprise an endless conveyor belt loop formed from plurality of transverse rollers or slats. When it is necessary to direct an article from the moving conveying path and onto a secondary conveying branch, a switch or switch mechanism is actuated to cause an assigned set of pusher elements to be diverted across the moving conveyor surface. The transversely diverted pusher elements engage the article to the secondary conveying branch, such as a takeaway conveyor. Such takeaway conveyors or spurs may be lower than the diverter/sorter such that gravity assists with the transfer, or such takeaway conveyors or spurs may be at the same level as the sortation conveyer. Sortation conveyors often use divert tracks or guide surfaces which direct the assigned set of pusher elements laterally across the conveying surface, while pusher elements which are not assigned pass by the divert tracks and continue to travel along the conveying surface in their set position. The number of pusher elements extended to push a particular object is determined by the dimension of the object in the direction of travel, with a fixed number of "extra" shoes sometimes added to the number (for example, one extra leading pusher element and three extra trailing pusher elements) to compensate, for example, for different orientations of an object on the conveyor.

Such sliding shoe sorters work well for regularly shaped objects (e.g., cuboid or cubic cartons) and objects whose x, y, and z dimensions are all the same or similar (e.g., within about 50% of each other). However, such sliding shoe sorters may not work as well for irregularly shaped objects (e.g., vehicles tires, fenders, exhaust systems, etc.) or for objects with at least one dimension substantially greater than at least one other dimension (e.g., long cartons, shipping tubes, etc.).

Known solutions for sorting irregular objects (big, heavy, oddly shaped, etc.) sometimes rely on friction from belts or wheels to divert an object perpendicularly to transport direction of the object sorter, such as via a belt that sits within and perpendicular to the transport path of the object sorter.

Applicant has discovered problems with current implementations of sliding shoe sorters. Through applied effort, ingenuity, and innovation, many of these identified problems have been solved by developing solutions that are included in embodiments of the present disclosure, many examples of which are described in detail herein.

### BRIEF SUMMARY

In general, embodiments of the present disclosure provided herein provide improvements in object sorters for conveyor systems and methods for sorting objects in conveyor systems. Other implementations for object sorters for conveyor systems will be, or will become, apparent to one with skill in the art upon examination of the following figures and detailed description. It is intended that all such additional implementations be included within this description be within the scope of the disclosure and be protected by the following claims.

In accordance with various embodiments of the present disclosure, an object sorter is provided. In at least one example embodiment, an object sorter comprises a support frame, a transport surface supported by the support frame, having a first edge and an opposing second edge, and adapted to transport a plurality of objects placed upon the transport surface, and a plurality of pusher shoes mounted to the support frame adjacent the first edge of the transport surface. Each pusher shoe is selectively and independently extendible toward the first edge of the transport surface to the second edge of the transport surface. Each of a selectable number of pusher shoes are selectively and independently extendible away from the first edge of the transport surface to form a selectable pattern in which each extending pusher shoe begins moving before an adjacent upstream extending pusher shoe begins moving, such that the selectable number of pusher shoes are adapted to selectively push an object off the transport surface. The object is at least one of (i) an object having at least one cross-section that is circular, oval, or elliptical, (ii) an object having at least one dimension that is greater than at least one other dimension by a predetermined percentage; and/or (iii) an object having no symmetry.

In some embodiments, the transport surface comprises a plurality of slats or tubes.

In some embodiments, each of a selectively variable number of preceding pusher shoes adjacently upstream from the selectable number of pusher shoes are selectively and independently extendible away from the first edge of the transport surface to the second edge of the transport surface distance, and each of a selectively variable number of following pusher shoes adjacently downstream from the selectable number of pusher shoes are selectively and independently extendible away from the first edge of the transport surface to the second edge of the transport surface 1 .

In some embodiments, the object sorter further comprises a drive chain or belt, at least two sprockets mounted at opposing ends of the support frame and supporting the drive chain or belt, and a motor to selectively rotate one of the sprockets to selectively move the drive chain or belt. At least one sprocket is selectively movable toward and away from another sprocket to adjust a distance between the two sprockets and thereby adjusting a tension of the drive chain or belt.

In some embodiments, the motor comprises a gear motor or an axial flux motor, and a speed of the motor is selectable to reduce energy consumption and/or wear of one or more components of the object sorter.

In some embodiments, the object sorter further comprises a control system comprising processing circuitry. The control system is mounted on the object sorter.

In accordance with another aspect of the disclosure, an object sorter is provided. In at least one example embodiment, an object sorter comprises a support frame, a transport surface supported by the support frame, having a first edge and an opposing second edge, and adapted to transport a plurality of objects placed upon the transport surface, and a plurality of pusher shoes mounted to the support frame adjacent the first edge of the transport surface , each pusher shoe selectively and independently extendible from the first edge of the transport surface to the second edge of the transport surface. Each of a selectively variable number of preceding pusher shoes adjacently upstream from the selectable number of pusher shoes are selectively and independently extendible away from the first edge of the transport surface to the second edge of the transport surface. Each of a selectively variable number of following pusher shoes adjacently downstream from the selectable number of pusher shoes are selectively and independently extendible away from the first edge of the transport surface to the second edge of the transport surface .

In accordance with another aspect of the disclosure, a conveyor system is provided. In at least one example embodiment, a conveyor system comprises an object sorter and powered spur conveyor positioned adjacent the object sorter. The object sorter comprises a support frame, a transport surface supported by the support frame and adapted to transport a plurality of objects placed upon the transport surface, and a plurality of pusher shoes mounted to the support frame adjacent the first edge of the transport surface. Each pusher shoe is selectively and independently extendible from the first edge of the transport surface to the second edge of the transport surface. The powered spur conveyor comprises a support frame and a transport belt supported by the support frame and adapted to transport a plurality of objects transferred by the object sorter onto the transport belt. Each of a selectable number of pusher shoes are selectively and independently extendible away from the first edge of the transport surface to form a selectable pattern, such that the selectable number of pusher shoes are adapted to selectively push an object off the transport surface of the object sorter onto the transport belt of the spur conveyor.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

Having thus described the embodiments of the disclosure in general terms, reference now will be made to the accompanying drawings, which are not necessarily drawn to scale, and wherein:
FIG. 1 is a perspective view of an example object sorter, in accordance with some embodiments of the present disclosure;
FIG. 2 is a perspective view of an example conveyor system, in accordance with some embodiments of the present disclosure;
FIG. 3 is a perspective view of an example conveyor system, in accordance with some embodiments of the present disclosure;
FIG. 4 is a block diagram of an example control system for an object sorter, in accordance with some embodiments of the present disclosure;
FIGS. 5A and 5B illustrate example objects that may be sorted by an example object sorter, in accordance with some embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

Various embodiments of the present disclosure provide an innovative design of an object sorter and conveyor system using such an object sorter.

In various embodiments, an object sorter uses a positive engagement of multiple pushers (also termed pusher shoes or simply shoes) to move the object across the width of the sorter and off the transport surface of the sorter, greatly reducing the characteristics of friction and increasing the reliability of the sort in diverting a parcel.

In various embodiments, the number of pusher shoes and/or the pattern of the pusher shoes are chosen based on one or more criteria of the object being sorted, such as but not limited to length, width, weight, "squareness," ratio of one dimension to another dimension, cross-sectional shape, lack of symmetry, etc. The one or more criteria may be determined using information stored in a database retrieved by scanning, e.g., a bar code on the object and/or from scanning the object itself, such as via lasers or machine vision.

Various embodiments will deploy a configurable number of shoes preceding the object "leading shoes") and following the object ("trailing shoes") to help guide the object into the divert location. In various embodiments, the number of leading shoes and the number of trailing shoes are configured independently. In various embodiments, the number of leading shoes and the number of trailing shoes can be configured based on various criteria of each object being sorted, such as but not limited to length, width, weight, "squareness," ratio of one dimension to another dimension, cross-sectional shape, lack of symmetry, etc., as described above.

In various embodiments, a conveyor system includes a powered belted spur to receive objects from the object sorter (instead of the typical roller-type spur). In various embodiments, the velocity and/or acceleration of the powered belted spur can be configured based on various criteria of each object being sorted, as described above. For example, the velocity of the belt may initially ramp up and then decrease as the object begins to transition from the object sorter to the powered belted spur.

In various embodiments, the size (one or more dimensions) and/or the orientation of each object may be measured as each object enters the object sorter, such as via lasers or machine vision. Such information may be used to determine the number of shoes, the pattern of the shoes, the number of leading shoes, the number of trailing shoes, etc. independently or combined with other information.

In various embodiments, artificial intelligence (such as a machine learning model) may be used to determine the number of shoes, the pattern of the shoes, the number of leading shoes, the number of trailing shoes, etc. independently or combined with other information.

Typical object sorters use a catenary to provide adjustment of the drive chain. In various embodiments of the present disclosure, a catenary is not used. Rather, one or both sprockets that support the drive chain are selectively movable toward and away from the other sprocket to adjust a distance between the two sprockets and thereby adjust the tension of the drive chain.

In various embodiments, the drive motor may be either a gear motor or an axial flux motor. The speed of the motor may be selectable to reduce energy consumption and/or wear of one or more components of the object sorter when the system rate does not require a faster speed to support throughput.

In various embodiments, a control system comprising processing circuitry is mounted on the object sorter, rather than in a remote cabinet elsewhere in the warehouse. The advantage of this architecture is that pre-calibration of the object sorter is enabled, which can reduce commissioning and set-up time.

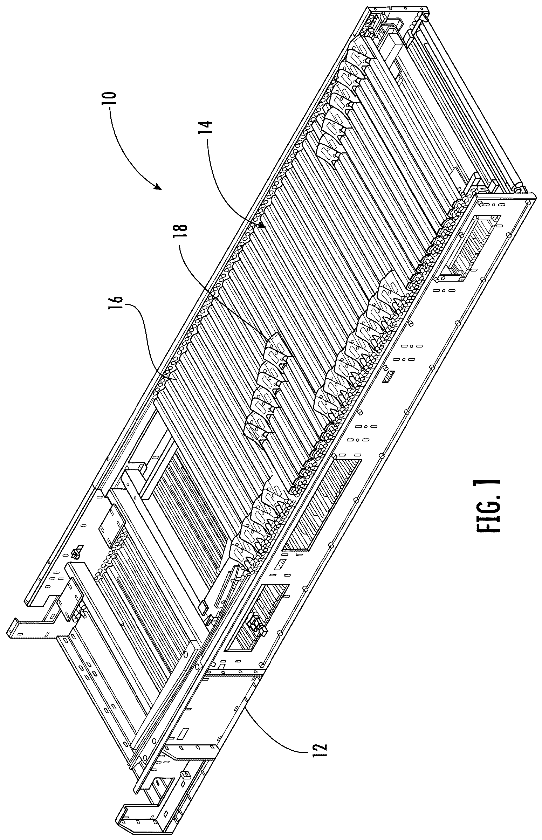

Referring now to the figures, FIG. 1 is a perspective view of an example object sorter, in accordance with some embodiments of the present disclosure. In the illustrated embodiment, an object sorter comprises a support frame 12 (legs are omitted from this figure), and a transport surface 14 supported by the support frame 12. The transport surface 14 is adapted to transport a plurality of objects placed upon the transport surface 14. In the illustrated embodiment, the transport surface is formed by movable slats 16. Alternatively, the transport surface may comprise a plurality of tubes. A plurality of pusher shoes 18 are mounted to the transport surface 14. Each pusher shoe 18 is selectively and independently extendible and retractable to form a pattern (such as an angled wall as shown in FIG. 1) to push an object off the transport surface 14. In various embodiments, the number of pusher shoes 18 and/or the pattern of the pusher shoes 18 are chosen based on one or more criteria of the object being sorted, as described above.

Various embodiments will deploy a configurable number of shoes preceding the object "leading shoes") and following the object ("trailing shoes") to help guide the object into the divert location. In various embodiments, the number of leading shoes and the number of trailing shoes be configured independently. In various embodiments, the number of leading shoes and the number of trailing shoes can be configured based one or more criteria of the object being sorted, as described above.

By configuring the number of pusher shoes and/or the pattern of the pusher shoes and/or the number of leading shoes and the number of trailing shoes can be configured based one or more criteria of the object being sorted, an effective and efficient number of pusher shoes is selected. Configuring too few pusher shoes may cause the object to not be pushed onto the spur conveyor. Conversely, configuring too many pusher shoes results in larger spacing between objects than is necessary, thereby unnecessarily reducing the throughput of the object sorter.

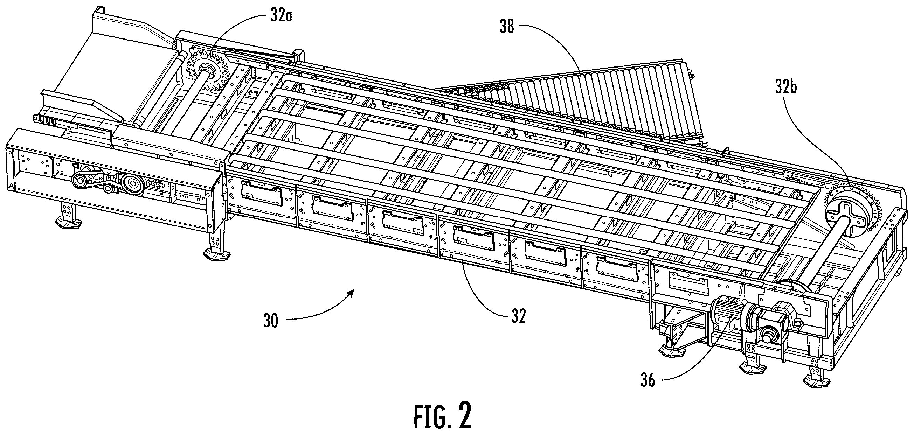

FIG. 2 is a perspective view of an example conveyor system, in accordance with some embodiments of the present disclosure. The example conveyor system of FIG. 2 comprises an object sorter 30 and a spur conveyor 38. In the illustrated embodiment, the object sorter 30 comprises a support frame 32, a first sprocket 32a and a second sprocket 32b to support a drive chain or belt (not shown), and a drive motor 36. The transport surface and pusher shoes are omitted from FIG. 2 for clarity. The first sprocket 32a and the second sprocket 32b are mounted at opposing ends of the support frame 32. The drive motor 36 selectively rotates the second sprocket 32b to selectively move the drive chain or belt. In various embodiments, one or both of the first sprocket 32a and the second sprocket 32b are selectively movable toward and away from each other to adjust a distance between the first sprocket 32a and the second sprocket 32b and thereby adjusting a tension of the drive chain or belt. In various embodiments, the drive motor 36 comprises a gear motor or an axial flux motor. In various embodiments, the speed of the drive motor 36 is variable and selectable to reduce energy consumption and/or wear of one or more components of the object sorter 30.

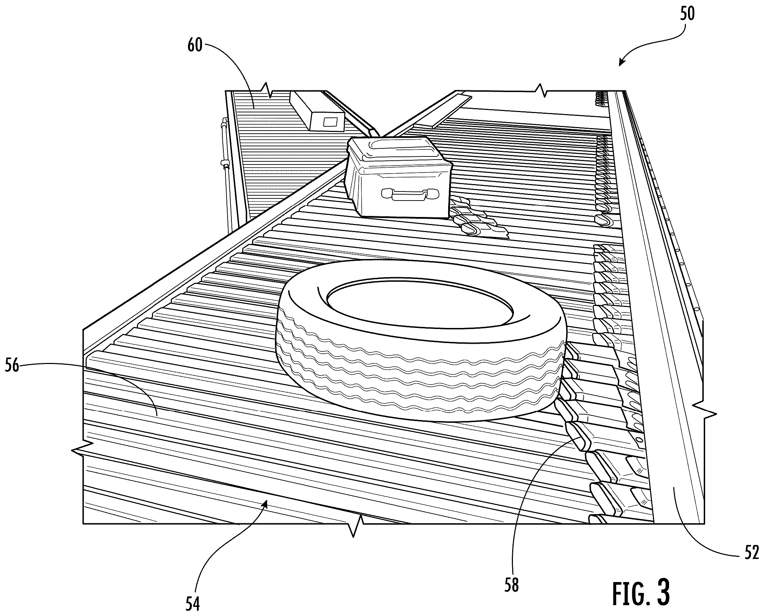

FIG. 3 is a perspective view of an example conveyor system in use, in accordance with some embodiments of the present disclosure. The example conveyor system of FIG. 3 comprises an object sorter 50 and a spur conveyor 60. In the illustrated embodiment, the object sorter 50 comprises a support frame (not visible in this figure), a transport surface 54 supported by the support frame and formed by a movable slat 56, a guardrail 52 to help keep the objects from falling off the transport surface, and a plurality of pusher shoes 58 mounted to the support frame.

In various embodiments, the number of pusher shoes 58 and/or the pattern of the pusher shoes 58 used to push the object being sorted off the transport surface 54 of the object sorter 50 of FIG. 3 can be configured based one or more criteria of the object being sorted. Similarly, in various embodiments, the number of leading shoes 58 and the number of trailing shoes 58 used to push the object being sorted off the transport surface 54 of the object sorter 50 can be configured based one or more criteria of the object being sorted.

The object sorter 50 of FIG. 3 is shown sorting a suitcase and a tire. In various embodiments, at least one of the criteria of the tire used to configure the number of pusher shoes 58 and/or the pattern of the pusher shoes 58 and the number of leading shoes 58 and the number of trailing shoes 58 is that the tire has a round cross-section. Objects with a round cross-section may tend to roll upstream when pushed by the pusher shoes. As such, a greater number of pusher shoes may be used for such objects.

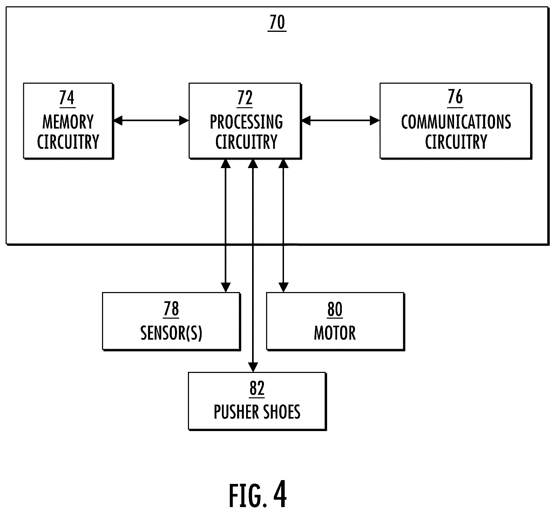

FIG. 4 is a block diagram of an example control system for an object sorter, in accordance with some embodiments of the present disclosure. In the illustrated embodiment, the control system 70 comprises processing circuitry 72, memory circuitry 74, and communications circuitry. In the illustrated embodiment, the processing circuitry 72 controls and/or receives input from one or more sensors 78 (such as a motor speed sensor or a position sensor), a drive motor 80, and pusher shoes 82.

Although the components are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries.

The use of the term "circuitry" as used herein with respect to components of the apparatus should therefore be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the control system 70 may provide or supplement the functionality of particular circuitry. For example, the processing circuitry 72 may provide processing functionality, the communications circuitry 76 may provide network interface functionality, the memory circuitry 74 may provide storage functionality, and the like.

In some embodiments, the processing circuitry 72 (and/or co-processor or any other processing circuitry assisting or otherwise associated with the processor) may be in communication with the memory circuitry 74 via a bus for passing information among components of the apparatus. The processing circuitry 72 may be embodied in a number of different ways and may, for example, include one or more processing devices configured to perform independently. Additionally, or alternatively, the processing circuitry 72 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

For example, the processing circuitry 72 may be embodied as one or more complex programmable logic devices (CPLDs), microprocessors, multi-core processors, co-processing entities, application-specific instruction-set processors (ASIPs), and/or controllers. Further, the processing circuitry 72 may be embodied as one or more other processing devices or circuitry. The term circuitry may refer to an entirely hardware embodiment or a combination of hardware and computer program products. Thus, the processing circuitry 72 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processing circuitry 72 may be configured for a particular use or configured to execute instructions stored in volatile or non-volatile media or otherwise accessible to the processing circuitry 72. As such, whether configured by hardware or computer program products, or by a combination thereof, the processing circuitry 72 may be capable of performing steps or operations according to embodiments of the present disclosure when configured accordingly.

In an example embodiment, the processing circuitry 72 may be configured to execute instructions stored in the memory circuitry 74 or otherwise accessible to the processor. Alternatively, or additionally, the processing circuitry 72 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processing circuitry 72 is embodied as an executor of software instructions, the instructions may specifically configure the processor to perform the algorithms and/or operations described herein when the instructions are executed.

In one embodiment, the memory circuitry 74 may further include or be in communication with volatile media (also referred to as volatile storage, memory, memory storage, memory circuitry and/or similar terms used herein interchangeably). In one embodiment, the volatile storage or memory may also include, such as but not limited to, RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. As will be recognized, the memory circuitry 74 may be used to store at least portions of the databases, database instances, database management system entities, data, applications, programs, program modules, scripts, source code, object code, byte code, compiled code, interpreted code, machine code, executable instructions, and/or the like being executed by, for example, the processing circuitry 72 as shown in FIG. 4. Thus, the databases, database instances, database management system entities, data, applications, programs, program modules, scripts, source code, object code, byte code, compiled code, interpreted code, machine code, executable instructions, and/or the like may be used to control certain aspects of the operation of the control system 70 with the assistance of the processing circuitry 72 and operating system.

In one embodiment, the memory circuitry 74 may further include or be in communication with non-volatile media (also referred to as non-volatile storage, memory, memory storage, memory circuitry and/or similar terms used herein interchangeably). In one embodiment, the memory circuitry 74 may include, such as, but not limited to, hard disks, ROM, PROM, EPROM, EEPROM, flash memory, MMCs, SD memory cards, Memory Sticks, CBRAM, PRAM, FeRAM, RRAM, SONOS, racetrack memory, and/or the like. As will be recognized, the memory circuitry 74 may store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably and in a general sense to may refer to a structured or unstructured collection of information/data that is stored in a computer-readable storage medium.

In various embodiments of the present disclosure, the memory circuitry 74 may also be embodied as a data storage device or devices, as a separate database server or servers, or as a combination of data storage devices and separate database servers. Further, in some embodiments, memory circuitry 74 may be embodied as a distributed repository such that some of the stored information/data is stored centrally in a location within the system and other information/data is stored in one or more remote locations. Alternatively, in some embodiments, the distributed repository may be distributed over a plurality of remote storage locations only. An example of the embodiments contemplated herein would include a cloud data storage system maintained by a third-party provider and where some or all of the information/data required for the operation of the recovery system may be stored. Further, the information/data required for the operation of the recovery system may also be partially stored in the cloud data storage system and partially stored in a locally maintained data storage system. More specifically, memory circuitry 74 may encompass one or more data stores configured to store information/data usable in certain embodiments.

In the example as shown in FIG. 4, one or more instances of circuitry may be part of the memory circuitry 74. In this example, the term "circuitry" refers to one or more data storage units in the memory circuitry 74 that may store executable computer program instructions. When the executable computer program instructions stored in such circuitry are executed by a processing circuitry (such as, but not limited to, the processing circuitry 72 shown in FIG. 4), the executable computer program instructions may cause the processing circuitry to perform one or more functions.

The communications circuitry 76 may be any means such as a device or circuitry embodied in either hardware or a combination of hardware and software that is configured to receive and/or transmit data from/to a network and/or any other device, circuitry, or module in communication with the control system 70. In this regard, the communications circuitry 76 may include, for example, a network interface for enabling communications with a wired or wireless communication network and/or in accordance with a variety of networking protocols described herein. For example, the communications circuitry 76 may include one or more network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

In an example embodiment, the processing circuitry 72 controls the operation of the motor 80 and the pusher shoes 82 according to configuration data and instructional programming stored in the memory circuitry 74.

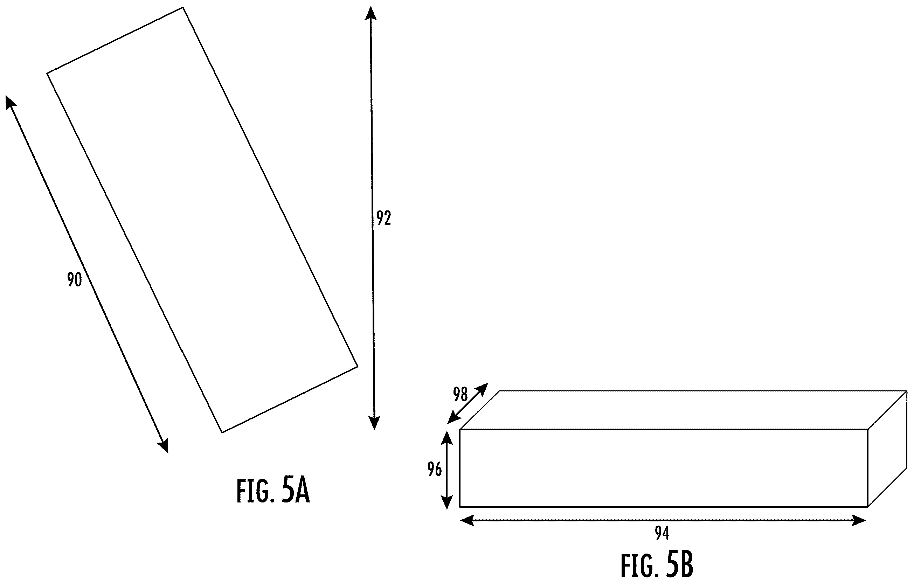

FIGS. 5A and 5B illustrate example objects that may be sorted by an example object sorter, in accordance with some embodiments of the present disclosure. FIG. 5A illustrates a top view or silhouette of an object, such as for example a long carton, while FIG. 5B illustrates a perspective view of the same object. In FIG. 5A, arrow 90 indicates the length of the object, while arrow 92 indicates the longest dimension when the object is rotated (as may occur if the object is not placed correctly on the transport surface of the object sorter). In various embodiments, the longest dimension indicated by arrow 92 is used to configure the number of pusher shoes and/or the pattern of the pusher shoes used to push the object being sorted off the transport surface of the object sorter and/or the number of leading shoes and the number of trailing shoes used to push the object being sorted off the transport surface of the object sorter rather than using the length of the object, thereby providing a more effective arrangement of the pusher shoes.

In FIG. 5B, arrow 94 indicates the length of the object, arrow 96 indicates the height of the object, and arrow 98 indicates the width of the object. In various embodiments, this information may be used to determine that one of the dimensions (length) is a predetermined percentage (e.g., 200%) greater than one or both of the other dimensions. This information may then be used to configure the number of pusher shoes and/or the pattern of the pusher shoes used to push the object being sorted off the transport surface of the object sorter and/or the number of leading shoes and the number of trailing shoes used to push the object being sorted off the transport surface of the object sorter.

Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed.

## Claims

1. An object sorter comprising:
a support frame;
a transport surface supported by the support frame and adapted to transport a plurality of objects placed upon the transport surface, the transport surface having a first edge and an opposing second edge; and
a plurality of pusher shoes mounted to the transport surface , each pusher shoe selectively and independently extendible from the first edge of the transport surface to the second edge of the transport surface;
wherein each of a selectable number of pusher shoes are selectively and independently extendible away from the first edge of the transport surface to the second edge of the transport surface to form a selectable pattern, such that the selectable number of pusher shoes are adapted to selectively push an object off the transport surface, the object being at least one of (i) an object having at least one cross-section that is circular, oval, or elliptical, (ii) an object having at least one dimension that is greater than at least one other dimension by a predetermined percentage; and/or (iii) an object having no symmetry.

2. The object sorter of claim 1, wherein the transport surface comprises a plurality of slats or tubes.

3. The object sorter of claim 1, wherein each of a selectively variable number of preceding pusher shoes adjacently upstream from the selectable number of pusher shoes are selectively and independently extendible away from the first edge of the transport surface to the second edge of the transport surface; and
wherein each of a selectively variable number of following pusher shoes adjacently downstream from the selectable number of pusher shoes are selectively and independently extendible away from the first edge of the transport surface to the second edge of the transport surface.

4. The object sorter of claim 1, further comprising:
a drive chain or belt;
at least two sprockets mounted at opposing ends of the support frame and supporting the drive chain or belt; and
a motor to selectively rotate one of the at least two sprockets to selectively move the drive chain or belt;
wherein at least one sprocket is selectively movable toward and away from another sprocket to adjust a distance between the two sprockets and thereby adjusting a tension of the drive chain or belt.

5. The object sorter of claim 4, wherein the motor comprises a gear motor or an axial flux motor; and
wherein a speed of the motor is selectable to reduce energy consumption and/or wear of one or more components of the object sorter and/or based on one or more characteristics of the object being sorted.

6. An object sorter comprising:
a support frame;
a transport surface supported by the support frame and adapted to transport a plurality of objects placed upon the transport surface, the transport surface having a first edge and an opposing second edge; and
a plurality of pusher shoes mounted to the transport surface adjacent the first edge of the transport surface, each pusher shoe selectively and independently extendible away from the first edge of the transport surface to the second edge of the transport surface;
wherein each of a selectively variable number of preceding pusher shoes adjacently upstream from the plurality of pusher shoes are selectively and independently extendible away from the first edge of the transport surface to the second edge of the transport surface; and
wherein each of a selectively variable number of following pusher shoes adjacently downstream from the plurality of pusher shoes are selectively and independently extendible away from the first edge of the transport surface to the second edge of the transport surface.

7. The object sorter of claim 6, wherein the transport surface comprises a plurality of slats or tubes.

8. The object sorter of claim 6, wherein each of a selectable number of pusher shoes are selectively and independently extendible away from the first edge of the transport surface to form a selectable pattern, such that the selectable number of pusher shoes are adapted to selectively push an object off the transport surface, the object being at least one of (i) an object having at least one cross-section that is circular, oval, or elliptical, (ii) an object having at least one dimension that is greater than at least one other dimension by a predetermined percentage; and/or (iii) an object having no symmetry.

9. The object sorter of claim 6, further comprising:
a drive chain or belt;
at least two sprockets mounted at opposing ends of the support frame and supporting the drive chain or belt; and
a motor to selectively rotate one of the at least two sprockets to selectively move the drive chain or belt;
wherein at least one sprocket is selectively movable toward and away from another sprocket to adjust a distance between the two sprockets and thereby adjusting a tension of the drive chain or belt.

10. A material handling system comprising:
an object sorter comprising:
a support frame;
a transport surface supported by the support frame and adapted to transport a plurality of objects placed upon the transport surface, the transport surface having a first edge and an opposing second edge; and
a plurality of pusher shoes mounted to the transport surface adjacent the first edge of the transport surface, each pusher shoe selectively and independently extendible away from the first edge of the transport surface to the second edge of the transport surface; and
a powered spur conveyor positioned adjacent the object sorter, the spur conveyor comprising:
a support frame; and
a transport belt supported by the support frame and adapted to transport a plurality of objects transferred by the object sorter onto the transport belt;
wherein each of a selectable number of pusher shoes are selectively and independently extendible away from the first edge of the transport surface to the second edge of the transport surface to form a selectable pattern, such that the selectable number of pusher shoes are adapted to selectively push an object off the transport surface of the object sorter onto the transport belt of the spur conveyor.

11. The material handling system of claim 10, wherein a speed and/or an acceleration of the transport belt are selectable based on one or more predefined criteria of an object being pushed off the transport surface of the object sorter onto the transport belt of the spur conveyor.

12. The material handling system of claim 10, wherein the transport surface of the object sorter comprises a plurality of slats or tubes.

13. The material handling system of claim 10, wherein each of a selectable number of pusher shoes are selectively and independently extendible away from the first edge of the transport surface to the second edge of the transport surface to form a selectable pattern, such that the selectable number of pusher shoes are adapted to selectively push an object off the transport surface, the object being at least one of (i) an object having at least one cross-section that is circular, oval, or elliptical, (ii) an object having at least one dimension that is greater than at least one other dimension by a predetermined percentage; and/or (iii) an object having no symmetry.

14. The material handling system of claim 10, wherein each of a selectively variable number of preceding pusher shoes adjacently upstream from the selectable number of pusher shoes are selectively and independently extendible away from the first edge of the transport surface to the second edge of the transport surface; and
wherein each of a selectively variable number of following pusher shoes adjacently downstream from the selectable number of pusher shoes are selectively and independently extendible away from the first edge of the transport surface to the second edge of the transport surface .

15. The material handling system of claim 10, wherein the object sorter further comprise:
a drive chain or belt;
at least two sprockets mounted at opposing ends of the support frame and supporting the drive chain or belt; and
a motor to selectively rotate one of the at least two sprockets to selectively move the drive chain or belt;
wherein at least one sprocket is selectively movable toward and away from another sprocket to adjust a distance between the two sprockets and thereby adjusting a tension of the drive chain or belt.
